(19) Europäisches Patentamt
European Patent Office
Office européen des brevets

(11) EP 2 821 666 A1

(12) **EUROPEAN PATENT APPLICATION**
published in accordance with Art. 153(4) EPC

(43) Date of publication:
07.01.2015 Bulletin 2015/02

(51) Int Cl.:
*F16F 15/02* (2006.01)    *B32B 27/30* (2006.01)

(21) Application number: 13754109.0

(86) International application number:
PCT/JP2013/055581

(22) Date of filing: 28.02.2013

(87) International publication number:
WO 2013/129626 (06.09.2013 Gazette 2013/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.03.2012 JP 2012047411

(71) Applicant: Nitto Denko Corporation
Ibaraki-shi, Osaka 567-8680 (JP)

(72) Inventor: MATSUDA Eiji
Ibaraki-shi
Osaka 567-8680 (JP)

(74) Representative: Grünecker, Kinkeldey,
Stockmair & Schwanhäusser
Leopoldstrasse 4
80802 München (DE)

(54) **DAMPING SHEET, METHOD FOR DAMPING VIBRATING MEMBER, AND USE METHOD**

(57) The present invention provides a damping sheet having further improved damping properties at a temperature of 80°C or higher in a frequency of 3 kHz or more, a method for damping a vibrating member, and a use method thereof. The damping sheet includes a resin layer and a restraint layer, the resin layer has a glass transition temperature of 20°C or lower, and a product (D·X) of a thickness (D) (mm) of the resin layer and a basis weight (X) (g/m$^2$) of the restraint layer is 250 mm·g/m$^2$ or more. The basis weight (X) of the restraint layer is preferably 200 g/m$^2$ or more, and the thickness (D) of the resin layer is preferably 0.1 mm or more.

*Fig. 1(a)*

*Fig. 1(b)*

**Description**

TECHNICAL FIELD

The present invention relates to a damping sheet, a method for damping a vibrating member, and a use method thereof. In detail, the invention relates to a damping sheet used by sticking to adherends in various industries, particularly a damping sheet exerting damping properties to an adherend (vibrating member) generating high frequency vibration in high temperature environment, a method for damping a vibrating member using the damping sheet, and a use method thereof.

BACKGROUND ART

Various parts used in the field of automobiles, railway vehicles, home appliances, business machines, household appliances or machine tools easily generate vibration sound when operating those. For this reason, it is known that damping properties of the parts are improved by, for example, sticking a damping sheet having a resin layer to the parts for the purpose of preventing generation of the vibration sound. For example, in order to obtain good vibration attenuation characteristic in a temperature of about 40°C, a damping sheet comprising a damping material containing butyl rubber and a C5 petroleum resin has been proposed (for example, see Patent Document 1). Furthermore, in order to improve damping properties at higher temperature, it is necessary to use a resin layer having high glass transition temperature, but this decreases damping properties at low temperature. For this reason, a damping material having laminated thereon resin layers having different glass transition temperature is used (for example, see Patent Document 2).

BACKGROUND ART DOCUMENT

PATENT DOCUMENT

    Patent Document 1: JP-A-9-136998
    Patent Document 2: JP-A-2011-089547

SUMMARY OF THE INVENTION

PROBLEMS THAT THE INVENTION IS TO SOLVE

Conventionally, the region generally requiring damping properties is a region having a frequency of from 100 Hz to 2,000 Hz, and an acoustic material has been used in a region having a frequency higher than this. However, in recent years, damping properties in high temperature (for example, from 60°C to 120°C) and high frequency (for example, from 3 kHz to 12 kHz) region has come to be required in uses of a motor, a converter and a battery. To new demand of damping properties in such a high temperature and high frequency region, in the damping sheet described in Patent Document 1, a glass transition temperature is low and a thickness of a restraint layer is small, and therefore it was difficult to obtain sufficient damping properties. On the other hand, in the damping sheet described in Patent Document 2, damping properties at high temperature can be secured, but further improvement to damping properties in high frequency region has been desired.

An object of the present invention is to provide a damping sheet having further improved damping properties to vibration with high frequency of 3 kHz or more in high temperature environment of 80°C or higher, a method for damping a vibrating member, and a use method thereof.

MEANS FOR SOLVING THE PROBLEMS

In order to achieve the above-mentioned object, a damping sheet of the present invention is a damping sheet including a resin layer and a restraint layer, in which the resin layer has a glass transition temperature of 20°C or lower, and a product (D·X) of a thickness (D) (mm) of the resin layer and a basis weight (X) (g/m$^2$) of the restraint layer is 250 mm·g/m$^2$ or more.

In the damping sheet of the present invention, by using a resin layer having a glass transition temperature of 20°C or lower and by selecting a resin layer and a restraint layer so that a product (D·X) of a thickness (D) (mm) of the resin layer and a basis weight (X) (g/m$^2$) of the restraint layer is 250 mm·g/m$^2$ or more, it is possible to improve damping properties at high temperature and high frequency range. This is because, by setting a glass transition temperature of the resin layer to 20°C or lower, the resin layer transits to rubbery and fluidized state at lower temperature. Therefore, in addition to the generation of bending and shear strain of the resin layer, stretching and expansion strain of the resin layer in the thickness direction is generated, whereby it is considered that the effect of exerting the damping properties can be obtained. Additionally, since stretching amount of the resin layer is improved by increasing the thickness of the resin layer and the basis weight of the restraint layer thereby improving strain generation of the resin layer, it is considered that more improved damping properties can be obtained. Therefore, by selecting a resin layer and a restraint layer so that a product $(D \cdot X)$ of a thickness $(D)$ (mm) of the resin layer and a basis weight $(X)$ (g/m$^2$) of the restraint layer is 250 mm·g/m$^2$ or more, it is possible to obtain an effect of increasing the stretching and expansion strain generated in the resin layer in the thickness direction. Furthermore, by combining these technical features, it is considered to be able to obtain higher damping effect at high temperature (80°C or higher) and high frequency (3 kHz or more) than the conventional products.

Accordingly, the damping sheet of the present invention is a damping sheet including a resin layer and a restraint layer, in which the resin layer has a glass transition temperature of 20°C or lower, and a product $(D \cdot x)$ of a thickness $(D)$ (mm) of the resin layer and a basis weight $(X)$ (g/m$^2$) of the restraint layer is 250 mm·g/m$^2$ or more.

In particular, the basis weight $(X)$ of the restraint layer is preferably 200 g/m$^2$ or more, and more preferably 1,000 g/m$^2$ or more. Additionally, the thickness $(D)$ of the resin layer is preferably 0.1 mm or more.

In the damping sheet of the present invention, it is preferable that the resin layer contains an acrylic polymer obtained by polymerizing a monomer component containing an alkyl (meth)acrylate as a main component.

Additionally, it is preferable that the resin layer contains hollow inorganic microparticles. In particular, it is preferable that the hollow inorganic microparticles are hollow glass balloons and a content ratio of the hollow inorganic microparticles is from 5 to 50% by volume in the resin layer.

It is preferable that the resin layer further contains cells. In particular, it is preferable that a content ratio of the cells is from 5 to 50% by volume in the resin layer.

It is preferable that the resin layer is obtained by ultraviolet curing.

The present invention also provides a method for damping a vibrating member, including sticking the damping sheet according to the present invention to the vibrating member.

Additionally, the present invention also provides a use method of a vibrating member, including using a vibrating member having stuck thereto the damping sheet according to the present invention, at a temperature of 80°C or higher in a frequency of 3 kHz or more.

ADVANTAGE OF THE INVENTION

The damping sheet of the present invention is that damping properties at high temperature (80°C or higher) and high frequency (3 kHz or more) are improved. Therefore, the damping properties in a wide range of a temperature are improved by sticking the damping sheet of the present invention including a resin layer and a restraint layer to a vibrating member. Therefore, according to the method for damping a vibrating member of the present invention, including sticking the damping sheet of the present invention to a vibrating member, even though the vibrating member is used in a wide range of a temperature, vibration of the vibrating member can be damped.

BRIEF DESCRIPTION OF THE DRAWINGS

[Fig. 1] Fig. 1(a) and Fig. 1(b) are explanatory views showing a method for sticking the damping sheet which is one embodiment of the present invention to a vibrating member. Fig. 1(a) shows a step of preparing a damping sheet and peeling a release paper, and Fig. 1(b) shows a step of sticking a damping sheet to a vibrating member.
[Fig. 2] Fig. 2 shows a general explanatory view for calculating a secondary resonant frequency $f_0$ and half-value widths ($f_1$ and $f_2$) in evaluation of a loss factor.

MODE FOR CARRYING OUT THE INVENTION

The damping sheet of the present invention includes a resin layer and a restraint layer laminated on the resin layer.

(Resin layer)

The resin layer includes a resin composition containing a thermosetting resin or a thermoplastic resin, as a main component. Examples of the thermosetting resin include epoxy resin, urethane resin, phenol resin and urea resin.

Epoxy resin is preferred from the characteristics of workability and storability. Those thermosetting resins do not involve a curing reaction before use, that is, before heating and after forming a damping member and sticking to a vibrating member, and cure by heating when using.

Examples of the epoxy resin include aromatic epoxy resins such as bisphenol type epoxy resin (for example, bisphenol A type epoxy resin, bisphenol F type epoxy resin, bisphenol S type epoxy resin, hydrogenated bisphenol A type epoxy resin or dimer acid-modified bisphenol type epoxy resin), dimer acid diglycidyl ester type epoxy resin, polypropylene glycol diglycidyl type epoxy resin, novolac type epoxy resin (for example, phenol novolac type epoxy resin, cresol novolac epoxy resin or biphenyl type epoxy resin), and naphthalene type epoxy resin; nitrogen-containing ring epoxy resins such as triepoxypropyl isocyanurate (triglycidyl isocyanurate) and hydantoin epoxy resin; glycidyl ether type epoxy resins; and glycidyl amine type epoxy resins.

The epoxy resin is liquid or solid at ordinary temperatures, and an epoxy equivalent is, for example, from 100 to 750 g/eq., and preferably from 150 to 500 g/eq.

A curing agent and a curing accelerator can be compounded with the epoxy resin. Examples of the curing agent include an amide-based compound such as dicyan diamide (DCDA); an amine-based compound such as polyamine; an imidazole-based compound such as imidazole; and an isocyanate-based compound. Those curing agents can be used alone or in combination thereof. An amide-based compound and an imidazole-based compound are preferred.

The amount of the curing agent is, for example, an amount so that reactive groups (for example, amino group) of the curing agent are equimolar to epoxy groups of the epoxy resin. Specifically, the amount of the curing agent is, for example, from 1 to 15 parts by weight, and preferably from 1.2 to 7.0 parts by weight, per 100 parts by weight of the epoxy resin. The curing agent can be used alone or in combination thereof.

The curing accelerator is concurrently used with the curing agent, and examples thereof include a urea compound (3-(3,4-dichlorophenyl)-1,1-dimethylurea: DCMU), a tertiary amine compound and a phosphorus compound. A urea compound is preferred. The amount of the curing accelerator is, for example, from 0.5 to 2 parts by weight per 100 parts by weight of the epoxy resin. The curing accelerator can be used alone or in combination thereof.

The urethane resin is obtained by the reaction between isocyanate and a hydroxyl group-containing compound. Examples of the isocyanate include aromatic diisocyanates such as tolylene diisocyanate (TDI), diphenylmethane diisocyanate (MDI) and their derivatives. Examples of the hydroxyl group-containing compound include polyols such as polypropylene glycol and polyethylene glycol.

The phenol resin is obtained by the addition condensation reaction between phenol and formaldehyde, and specific examples thereof include a novolac type phenol resin and a resole type phenol.

The urea resin is obtained by the condensation reaction between urea and formaldehyde.

Those thermosetting resins can be used alone or in combination thereof. Preferably, the epoxy resin is used alone or different kinds of epoxy resins are combined and used.

The thermoplastic resin is, for example, a rubbery thermoplastic resin, and is, for example, a homopolymer (homopolymerized product) including a single monomer and/or a copolymer (copolymerized product) including a plurality of monomers. Specifically, examples of the homopolymer include an acrylic polymer obtained by the polymerization of a monomer component containing an alkyl (meth)acrylate as a main component, polystyrene (PSt), polyvinyl chloride (PVC), polyacrylonitrile (PAN) and polyphenyl sulfide (PPS), and examples of the copolymer include an acrylonitrile-butadiene-styrene copolymer (ABS) resin and polycarbonate (PC).

Further example of the thermoplastic resin includes, for example, a rubber composition. The rubber composition contains rubber as a main component, and examples of the rubber include a styrene-butadiene rubber (SBR: for example, a styrene-butadiene random copolymer, a styrene-butadiene-styrene block copolymer, a styrene-ethylene-butadiene copolymer or a styrene-ethylene-butadiene-styrene block copolymer), a styrene-isoprene rubber (for example, a styrene-isoprene-styrene block copolymer), a styrene-isoprene-butadiene rubber, a polybutadiene rubber (for example, 1,4-butadiene rubber, syndiotactic-1,2-polybutadiene rubber or acrylonitrile-butadiene rubber), a polyisobutylene rubber, a polyisoprene rubber, a chloroprene rubber, an isobutylene-isoprene rubber, a nitrile rubber, a butyl rubber, a nitrile-butyl rubber, an acryl rubber, a regenerated rubber and a natural rubber.

The acrylic polymer is obtained by the polymerization of a monomer component containing an alkyl (meth)acrylate as a main component. Examples of the alkyl (meth)acrylate used in the acrylic polymer include alkyl (meth)acrylates (alkyl moiety has from 1 to 20 carbon atoms) in which an alkyl moiety is a linear alkyl or a branched alkyl, such as methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicocyl (meth)acrylate.

Examples of the alkyl (meth)acrylate further include (meth)acrylic acid esters in which an alkyl moiety is an alicyclic alkyl, such as cyclopentyl (meth)acrylate, cyclohexyl (meth)acrylate and isobornyl (meth)acrylate. Those (meth)acrylic acid esters can be used alone or in combination thereof.

Of those (meth)acrylic acid esters, alkyl (meth)acrylates in which an alkyl moiety has from 2 to 14 carbon atoms are preferred, and alkyl (meth)acrylates in which an alkyl moiety has from 2 to 10 carbon atoms are more preferred.

Those alkyl (meth)acrylates are contained in an amount of preferably from 60 to 99% by weight, more preferably from 70 to 98% by weight, and still more preferably from 80 to 97% by weight, in the monomer component.

The monomer component can contain the alkyl (meth)acrylates described above as essential components, and can further contain a polar group-containing vinyl monomer, a polyfunctional vinyl monomer and the like as optional components.

Examples of the polar group-containing vinyl monomer include a carboxyl group-containing vinyl monomer such as (meth)acrylic acid, itaconic acid, maleic acid fumaric acid, crotonic acid or isocrotonic acid, or its anhydride; a hydroxyl group-containing vinyl monomer such as hydroxyethyl (meth)acrylate, hydroxypropyl (meth)acrylate or hydroxybutyl (meth)acrylate; an amide group-containing vinyl monomer such as acrylamide, methacrylamide, N,N-dimethyl (meth)acrylamide, N-methylol (meth)acrylamide, N-methoxymethyl (meth)acrylamide or N-butoxymethyl (meth)acrylamide; an amino group-containing vinyl monomer such as aminoethyl (meth)acrylate, dimethylaminoethyl (meth)acrylate or tert-butylaminoethyl (meth)acrylate; a glycidyl group-containing vinyl monomer such as glycidyl (meth)acrylate or methylglycidyl (meth)acrylate; a cyano group-containing monomer such as acrylonitrile or methacrylonitrile; and a heteroring-containing vinyl monomer such as N-vinyl-2-pyrrolidone, (meth)acryloyl morpholine, N-vinylpyridine, N-vinylpiperidone, N-vinylpyrimidine, N-vinylpiperazine, N-vinylpyrrol, N-vinylimidazole or N-vinyloxazole.

Examples of the polar group-containing vinyl monomer preferably include a carboxyl group-containing vinyl monomer and its anhydride. Those polar group-containing vinyl monomers can be used alone or in combination thereof.

The polar group-containing vinyl monomer is contained in an amount of preferably from 1 to 38% by weight, more preferably from 1.99 to 28.5% by weight, and still more preferably from 2.98 to 19% by weight, in the monomer component.

Examples of the polyfunctional vinyl monomer include (mono or poly)alkylene glycol di(meth)acrylates such as (mono or poly)ethylene glycol di(meth)acrylates such as ethylene glycol di(meth)acrylate, diethylene glycol di(meth)acrylate, triethylene glycol di(meth)acrylate, trimethylolpropane tri(meth)acrylate and tetraethylene glycol di(meth)acrylate, or (mono or poly) propylene glycol di(meth)acrylates such as propylene glycol di(meth)acrylate; and (meth)acrylate ester monomers of polyhydric alcohols such as neopentyl glycol di(meth)acrylate, 1,6-hexanediol di(meth)acrylate, pentaerythritol di(meth)acrylate, trimethylolpropane tri(meth)acrylate, pentaerythritol tri(meth)acrylate and dipentaerythritol hexa(meth)acrylate; and for example, divinylbenzene. Further examples of the polyfunctional monomer include epoxy acrylate, polyester acrylate and urethane acrylate.

The polyfunctional vinyl monomer is contained in an amount of preferably from 0 to 2% by weight, more preferably from 0.01 to 1.5% by weight, and still more preferably from 0.02 to 1% by weight, in the monomer component.

The acrylic polymer can be obtained by polymerizing a monomer component containing an alkyl (meth)acrylate as a main component. Examples of the polymerization method include photopolymerization and heat polymerization. Photopolymerization is preferred from the advantage that polymerization time can be shortened.

In the polymerization of the monomer component, other than a method of polymerizing a monomer component at one time (en bloc polymerization), a part of a monomer component is first polymerized (partial polymerization) as a first stage, and the remainder can be polymerized (second stage polymerization) as a second stage, as described hereinafter. Furthermore, the monomer component can be polymerized by multistage of three or more stages.

In the polymerization of the monomer component, a polymerization initiator is used, and in the case of a photopolymerization, a photopolymerization initiator is used.

Examples of the photopolymerization initiator include a benzoin ether-based photopolymerization initiator, an acetophenone-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator and a thioxanthone-based photopolymerization initiator.

Examples of the benzoin ether-based photopolymerization initiator specifically include benzoin methyl ether, benzoin ethyl ether, benzoin propyl ether, benzoin isopropyl ether, benzoin isobutyl ether, 2,2-dimethoxy-1,2-diphenylethan-1-one and anisole methyl ether. Examples of the acetophenone-based photopolymerization initiator include 2,2-diethoxyacetophenone, 2,2-dimethoxy-2-phenyl acetophenone, 1-hydroxycyclohexylphenyl ketone, 4-phenoxydichlotoacetophenone and 4-(t-butyl)dichloroacetophenone. Examples of the $\alpha$-ketol-based photopolymerization initiator include 2-methyl-2-hydroxypropiophenone and 1-[4-(2-hydroxyethyl)phenyl-2-methylpropan-1-one. Example of the aromatic sulfonyl chloride-based photopolymerization initiator includes 2-naphthalene sulfonylchloride. Example of the photoactive oxime-based photopolymerization initiator includes 1-phenyl-1,1-propanedion-2-(o-ethoxycarbonyl)- oxime.

Example of the benzoin-based photopolymerization initiator includes benzoin. Example of the benzyl-based photopolymerization initiator includes benzil. Examples of the benzophenone-based photopolymerization initiator include benzophenone, benzoylbenzoic acid, 3,3'-dimethyl-4-methoxybenzophenone, polyvinyl benzophenone and $\alpha$-hydrox-

ycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone and dodecylthixanthone.

Those photopolymerization initiators can be used alone or in combination thereof. The amount of the photopolymerization initiator is, for example, from 0.01 to 5 parts by weight, and preferably from 0.05 to 3 parts by weight, per 100 parts by weight of the monomer component.

Examples of irradiation light in the photopolymerization include visible light, ultraviolet rays and electron beams (for example, X-ray, $\alpha$-ray, $\beta$-ray and $\gamma$-ray). Ultraviolet rays are preferably used.

The monomer component is polymerized by the polymerization with the polymerization initiator described above (preferably ultraviolet polymerization with the photopolymerization initiator) and cured (preferably ultraviolet-cured), whereby an acrylic polymer including an alkyl (meth)acrylate as a main component can be obtained.

In the resin layer of the present invention, hollow inorganic microparticles can be contained in the acrylic polymer. A thick resin layer is easy to obtain by containing the hollow inorganic microparticles. An outer shape of the hollow inorganic microparticles is not particularly limited so long as an inner shape thereof is hollow. Examples of the outer shape of the hollow inorganic microparticles include a spherical shape and a polyhedral (for example, regular tetrahedron, regular hexahedron (cube), regular octahedron or regular dodecahedron) shape. Examples of an inorganic material of the hollow inorganic microparticles include glass, Shirasu (volcanic ash and sand), silica, alumina and ceramics. Glass is preferably used. More specifically, hollow glass balloons are preferred as the hollow inorganic microparticles. As the hollow inorganic microparticles, the commercially available products can be used, and examples thereof include Cel-star Series (CEL-STAR Series and hollow glass balloons, manufactured by Tokai Kogyo Co., Ltd.). Those hollow inorganic microparticles can be used alone or in combination thereof.

The hollow inorganic microparticles have an average maximum length (in the case of a spherical shape, an average particle diameter) of, for example, from 1 to 500 $\mu$m, preferably from 5 to 200 $\mu$m, and more preferably from 10 to 100 $\mu$m.

The hollow inorganic microparticles have a density (true density) of, for example, from 0.1 to 0.8 g/cm$^3$, and preferably from 0.12 to 0.5 g/cm$^3$. In the case where the density of the hollow inorganic microparticles does not reach the above range, floating of the hollow inorganic microparticles becomes large in compounding the hollow inorganic microparticles, and the hollow inorganic microparticles may become difficult to be uniformly dispersed. On the other hand, in the case where the density of the hollow inorganic microparticles exceeds the above range, production cost may be increased.

The content ratio of the hollow inorganic microparticles is, for example, from 5 to 50% by volume, preferably from 10 to 50% by volume, and more preferably from 15 to 40% by volume, based on the volume of the resin layer. In the case where the content ratio of the hollow inorganic microparticles does not reach the above range, the effect by the addition of the hollow inorganic microparticles may be decreased. On the other hand, in the case where the content ratio of the hollow inorganic microparticles contained exceeds the above range, adhesive force by the resin layer may be decreased.

In the resin layer of the present invention, the acrylic polymer can contain cells. Excellent effect is obtained in damping properties at high frequency by containing cells in the acrylic polymer. In order to contain cells in the resin layer, for example, bubbles are mixed in a monomer composition containing the monomer component, the polymerization initiator, the hollow inorganic microparticles and the like, and the monomer composition is then polymerized and cured, thereby obtaining the resin layer containing cells. Examples of the gas for forming bubbles (bubble forming gas) include an inert gas such as nitrogen, and air.

The content ratio of the cells in the resin layer is, for example, from 5 to 50% by volume, preferably from 8 to 30% by volume, and more preferably from 10 to 20% by volume, based on the volume of the resin layer. In the case where the content ratio of the cells contained exceeds the above range, damping properties may be decreased. On the other hand, in the case where the content ratio of the cells contained does not reach the above range, the effect by containing the cells may be difficult to obtain.

In order to mix the cells with the monomer composition, an apparatus including a disk having a through-hole formed in a central part, a stator arranged on the disk and having many fine teeth formed thereon, and a rotor arranged on the disk so as to face the stator and having fine teeth thereon similar to the stator is used. In this apparatus, the monomer composition is introduced between the teeth on the stator and the teeth on the rotor, and a bubble forming gas is introduced in the monomer composition through the through-hole while rotating the rotor in high speed. Thus, the monomer composition having bubbles finely and uniformly dispersed therein can be obtained.

In order to suppress or prevent unification of bubbles, preferably steps of from bubble mixing to resin layer formation are continuously carried out as a series of steps. That is, the resin layer is formed immediately after mixing bubbles.

In order to make the bubbles mixed in the monomer composition exist stably, preferably the bubbles are compounded in the monomer composition as a final component. More preferably a viscosity of the monomer composition is increased. The viscosity of the monomer composition can be measured, for example, using BH viscometer as a viscometer under the conditions of rotor: No.5 rotor, the number of revolution: 10 s$^{-1}$, and measurement temperature: 30°C. The viscosity of the monomer composition is, for example, from 5 to 50 Pa·s, and preferably 10 to 40 Pa·s. In the case where the viscosity of the monomer composition does not reach the above range, bubbles mixed may be immediately unified or may be escaped from the monomer composition. On the other hand, in the case where the viscosity of the monomer composition exceeds the above range, bubbles become difficult to be uniformly dispersed in the monomer composition.

In order to adjust the viscosity of the monomer composition, for example, the monomer component (for example, a (meth)acrylic acid ester or a polar group-containing monomer) is partially polymerized, or a thickening component such as an acrylic rubber is compounded. Preferably, the monomer component is partially polymerized.

In order to partially polymerize the monomer component, specifically an alkyl (meth)acrylate, a polar group-containing monomer and a polymerization initiator are mixed to prepare a monomer composition, and the monomer composition is partially polymerized to prepare a monomer composition in which a part of the monomer component has been partially polymerized (sometimes referred to as a syrup). Thereafter, a polyfunctional vinyl monomer, hollow inorganic microparticles and the like are compounded with the syrup to prepare a monomer composition having the above-described viscosity. Thereafter, unpolymerized monomer component is polymerized and cured. In preparing the syrup, hollow microspheres and additives can be compounded together with the compounding of the alkyl (meth)acrylate.

Thereby, bubbles uniformly dispersed in the monomer composition define cells in the resin layer. Thereby, uniformly dispersed cells are formed in the resin layer including an acrylic polymer as a base polymer.

In the formation of the resin layer, the monomer composition is applied to, for example, a substrate in which one side thereof has been release-treated (for example, a polyethylene terephthalate substrate), and polymerized (ultraviolet-cured) on the substrate. Furthermore, the monomer composition can be applied to a restraint layer described hereinafter, and polymerized (ultraviolet-cured) on the restraint layer, thereby directly forming the resin layer on the restraint layer.

The known additives such as a filler, a thixotropic agent, a lubricant, a scorch inhibitor, a stabilizer, a softener, a plasticizer, an aging inhibitor, an antioxidant, a UV absorber, a colorant, an antimold agent, a flame retardant, a tackifier (for example, a petroleum-based resin) and a surfactant can be contained in the resin layer of the present invention in an appropriate proportion.

The filler is compounded as necessary from the standpoints of reinforcing property and handling property, and examples thereof include calcium carbonate (for example, heavy calcium carbonate, light calcium carbonate or Hakuenka), talc, mica, clay, mica powder, bentonite (including organite), silica, alumina, aluminum silicate, titanium oxide, carbon black, acetylene black, a glass powder, boron nitride and a metal powder (including an aluminum powder). Those fillers can be used alone or in combination thereof.

In the case of using a thermosetting resin as a resin forming the resin layer of the present invention, the amount of the thermosetting resin is, for example, 100 parts by weight or less, preferably 90 parts by weight or less, more preferably 70 parts by weight or less, per 100 parts by weight of the thermosetting resin composition forming the resin layer. The amount thereof is generally 50 parts by weight or more.

In the case of using a thermoplastic resin as a resin forming the resin layer of the present invention, the amount of the thermoplastic resin is, for example, 100 parts by weight or less, preferably 90 parts by weight or less, more preferably 70 parts by weight or less, per 100 parts by weight of the thermoplastic resin composition forming the resin layer. The amount thereof is generally 50 parts by weight or more.

The resin layer used in the damping sheet of the present invention is characterized in that its glass transition temperature is 20°C or lower. When the glass transition temperature of the resin layer is 20°C or lower, up-and-down expansion and shrinkage deformation occur in the resin layer at lower temperature. Therefore, there is the advantage that the effect that damping properties are improved in a wide temperature range is exhibited. The glass transition temperature of the resin layer is preferably 0°C or lower, and more preferably -20°C or lower. The glass transition temperature of the resin layer is measured according to a heat flow velocity differential scanning calorimetry of JIS K7121-1987 as described in examples described hereinafter.

The glass transition temperature of the resin layer of 20°C or lower can be achieved by appropriately selecting a resin having low glass transition temperature as the thermosetting resin or thermoplastic resin used. For example, in the case of using an acryl polymer obtained by the polymerization of a monomer component containing an alkyl (meth)acrylate as a main component, the glass transition temperature of 20°C or lower can be achieved by using a monomer component in which a glass transition temperature of its homopolymer is low (for example, 0°C or lower) as the alkyl (meth)acrylate used as a main component. The glass transition temperature of a homopolymer of an alkyl (meth)acrylate is disclosed in, for example, Polymer Handbooks or Pressure-Sensitive Adhesive Handbooks, and in the case of copolymerizing a plurality of monomers, its glass transition temperature can be assumed from the FOX equation.

The thickness (D) of the resin layer of the present invention is not particularly limited, but is preferably 0.1 mm or more (for example, from 0.1 to 3.0 mm), more preferably 0.2 mm or more (for example, from 0.2 to 2.0 mm), and still more preferably 0.3 mm or more (for example, from 0.3 to 1.0 mm). In the present invention, it is assumed that strain generated in the resin layer is increased by increasing the thickness of the resin layer, thereby improving the damping properties. Therefore, when the thickness (D) of the resin layer is 0.1 mm or more, it becomes easy to obtain the damping properties even in any temperature and frequency ranges.

(Restraint layer)

The restraint layer restrains the resin layer and improves the damping properties and workability. The restraint layer has a sheet shape or a plate shape, and is formed from a material that can be integrally stuck to the resin layer. Examples of the material include a glass cloth, a metal foil, a fabric and a carbon fiber. The glass cloth is a material obtained by shaping glass fibers into a cloth, and the conventional glass cloth may be used. The glass cloth includes a resin-impregnated glass cloth. The resin-impregnated glass cloth is a material obtained by impregnating the glass cloth with a synthetic resin such as a thermosetting resin or a thermoplastic resin, and conventional resin-impregnated glass cloth may be used. Examples of the thermosetting resin include an epoxy resin, a urethane resin, a phenol resin, a melamine resin and a urea resin. Examples of thermoplastic resin include polyvinyl acetate, an ethylene-vinyl acetate copolymer (EVA), polyvinyl chloride and an EVA-polyvinyl chloride copolymer. The above-described thermosetting resins and thermoplastic resins can be used alone or in combination thereof, respectively. Furthermore, the thermosetting resin and the thermoplastic resin can be mixed.

Examples of the metal foil include the conventional foils such as an aluminum foil or a steel foil. Examples of the metal plate include the conventional metal plates such as aluminum, titanium, brass and SUS. Examples of the fabric include woven fabrics and non-woven fabrics, including synthetic resin fibers or natural fibers in a cloth shape.

Those restraint layers are that its basis weight (X) is preferably 200 $g/m^2$ or more (for example, from 200 to 15,000 $g/m^2$), more preferably 1,000 $g/m^2$ or more (for example, from 1,000 to 10,000 $g/m^2$), and still more preferably 3,000 $g/m^2$ or more (for example, from 3,000 to 9,000 $g/m^2$). When the basis weight (X) of the restraint layer is 200 $g/m^2$ or more, up-and-down expansion and stretching strain of the resin layer are increased, whereby the effect of improving the damping properties can be obtained at high temperature and high frequency. The basis weight means a weight (g) of the restraint layer per unit area ($m^2$), and one skilled in the art can easily select a material having a desired basis weight without remarkable difficulty.

The thickness of the restraint layer is not particularly limited, but is preferably from 0.05 to 2 mm, and more preferably 0.1 to 1.5 mm. In the case where the thickness of the restraint layer is less than 0.05 mm, sticking workability when preparing a sample may be decreased, and in the case where the thickness exceeds 2 mm, processability may be deteriorated.

(Damping sheet)

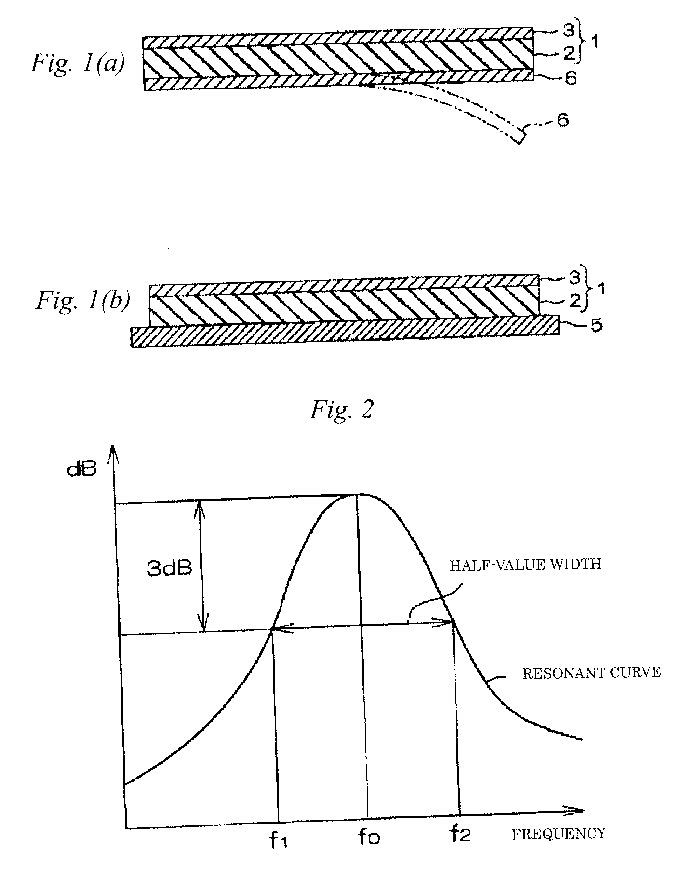

Fig. 1(a) and Fig. 1(b) are explanatory views showing a method for sticking the damping sheet that is one embodiment of the present invention, to a vibrating member. The damping sheet that is one embodiment of the present invention is described by reference to Fig. 1(a) and Fig. 1(b).

As shown in Fig. 1(a), a damping sheet 1 includes a resin layer 2 including a resin composition formed into a sheet shape, and a restraint layer 3 laminated on one surface of the resin layer 2. A separator 6 for protecting a resin layer surface is stuck to the surface of the resin layer 2. Furthermore, the damping sheet 1 can be previously cut into an appropriate size according to a size of a vibrating member 5 to be damped.

The damping sheet 1 of the present invention can be obtained by laminating the resin layer 2 and the restraint layer 3. A method for laminating the resin layer 2 and the restraint layer 3 is not particularly limited, and the general press molding can be used. In the damping sheet 1 obtained, the separator (release paper) 6 can be stuck to the surface of resin layer 2 as necessary until actually using the damping sheet 1. The resin layer 2 and the restraint layer 3 are preferably laminated so as to directly contact with each other, but an optional intermediate layer may be provided between the resin layer 2 and the restraint layer 3.

The damping sheet of the present invention is characterized in that the product (D·X) of the thickness (D) (mm) of the resin layer and the basis weight(X) ($g/m^2$) of the restraint layer is 250 mm·$g/m^2$ or more (generally from 250 to 5,000 mm·$g/m^2$). The product is preferably 1,000 mm·$g/m^2$ or more (generally from 1,000 to 4,500 mm·$g/m^2$), more preferably 1,500 mm·$g/m^2$ or more (generally from 1,500 to 4,000 mm·$g/m^2$), and particularly preferably 2,500 mm·$g/m^2$ or more (generally from 2,500 to 4,000 mm·$g/m^2$). By selecting the resin layer and the restraint layer such that the product (D·X) of the thickness (D) (mm) of the resin layer and the basis weight(X) ($g/m^2$) of the restraint layer is 250 mm·$g/m^2$ or more, up-and-down expansion and stretching strain of the resin layer are increased, whereby the effect of improving the damping properties in high temperature and high frequency region can be obtained. On the other hand, in the case where the product (D·X) of the thickness (D) (mm) of the resin layer and the basis weight(X) ($g/m^2$) of the restraint layer is less than 250 mm·$g/m^2$, the damping properties in high temperature and high frequency region may be decreased, and furthermore, working efficiency of preparing a damping material may be decreased. In the case where the product (D·X) of the thickness (D) (mm) of the resin layer and the basis weight(X) (g/m$^2$) of the restraint layer exceeds 5,000 mm·g/m$^2$, a weight of the damping material is increased and processability of the restraint layer may be decreased.

Regarding the combination of the resin layer and the restraint layer in the present invention, for example, in the case where the thickness of the resin layer is 1.2 mm, the restraint layer having a basis weight of 230 g/m$^2$ or more is preferably used. On the other hand, in the case where the thickness of the resin layer is small, for example, in the case where the thickness thereof is 0.4 mm, the basis weight of the restraint layer is 1,350 g/m$^2$ or more, and preferably 2,700 g/m$^2$ or more.

The thickness (the total thickness of the resin layer and the restraint layer) of the damping sheet of the present invention is preferably from 0.1 to 5 mm, more preferably from 0.3 to 3.5 mm, and still more preferably from 0.4 to 2.2 mm.

The loss factor of the damping sheet described in the examples described hereinafter is desirably 0.02 or more when the temperature in the measurement of the damping properties (loss factor described hereinafter) is 80°C or higher (80 to 100°C) and the measurement frequency is 3 kHz or more. When the loss factor is 0.02 or more, practical damping properties are exhibited.

(Damping method)

The method for damping a damping sheet, that is one embodiment of the present invention is described below by reference to Fig. 1(a) and Fig. 1(b).

In order to damp the vibrating member 5, the damping sheet 1 is stuck to the vibrating member 5. The vibrating member 5 is, for example, parts used in home appliances and powder generation and electric storage facilities, for example, parts arranged near a motor, an inverter, a compressor or the like. The damping member 5 reaches, for example, the same temperature as the glass transition temperature of the resin layer, or the temperature of from -20 to 20°C to the glass transition temperature, or the temperature of 80°C or higher.

In order to stick the damping sheet 1 to the vibrating member 5, the release paper 6 is peeled from the surface of the resin layer 2 as shown by a virtual line in Fig. 1(a), and the surface of the resin layer 2 is then arranged on the surface of the vibrating member 5 as shown in Fig. 1(b).

Thereafter, in the case where the resin layer 2 contains a thermosetting resin composition as a main component, after the resin layer 2 has been stuck to the restraint layer 3, the resin layer 2 is cured by heating at, for example, from 150 to 200°C, and preferably from 160 to 190°C, for, for example, from 1 to 90 minutes, and preferably from 10 to 60 minutes.

In the case where the resin layer 2 contains a thermoplastic resin as a main component, in the arrangement to the vibrating member 5, the resin layer 2 is thermocompression-bonded to the vibrating member 5 at, for example, from 80 to 120°C. Thereby, the resin layer 2 is adhered to the vibrating member 5 (heat fusion), whereby the vibrating member 5 can be damped.

EXAMPLES

The present invention is described below in more detail by reference to the following Examples and Comparative Examples, but the invention is not construed as being limited to the Example and Comparative Examples.

Example 1

(Formation of resin layer)

0.05 Parts by weight of IRGACURE 651 (trade name, 2,2-dimethoxy-1,2-diphenylethan-1-one, manufactured by Ciba Specialty Chemicals) and 0.05 parts by weight of IRGACURE 184 (trade name, 1-hydroxy-cyclohexyl-phenyl ketone, manufactured by Ciba Specialty Chemicals) were compounded with a monomer component obtained by mixing 90 parts by weight of 2-ethylhexyl acrylate and 10 parts by weight of acrylic acid to prepare a monomer composition. Thereafter, the monomer mixture was irradiated with ultraviolet rays (wavelength: 300 to 400 nm) having an illuminance of about 5 mW until a viscosity (BH viscometer, No.5 rotor, 10 s$^{-1}$, measurement temperature: 30°C) of the monomer composition reaches about 15 Pa·s, thereby preparing a syrup in which a part of the monomer composition had been polymerized.

0.1 Parts by weight of 1,6-hexanediol diacrylate was added to the syrup, and hollow glass balloons (trade name "CEL-STAR Z-27, manufactured by Tokai Kogyo Co., Ltd.) were added to the syrup in the proportion of 30% by volume based on the syrup (not containing 1,6-hexanediol diacrylate). 1 Part by weight of a fluorine-based surfactant (trade name "SURFLON S-393", manufactured by AGC Seimi Chemical Co., Ltd.; acrylic copolymer having a polyoxyethylene group and a fluorinated hydrocarbon group in side chains, weight average molecular weight Mw: 8,300) was further added. The proportion of the hollow glass balloons in the monomer composition was about 23% by volume based on the monomer composition.

Nitrogen was introduced in the monomer composition thus prepared using the apparatus described above to uniformly mix and disperse bubbles of nitrogen. Thus, a monomer composition having cells dispersed therein was obtained. In the mixing of the bubbles, the proportion of cells was adjusted to be 15% by volume.

The monomer composition obtained above was filled in a space between two polyethylene terephthalate substrates (the facing surfaces had been release-treated) arranged so as to face to each other through the space such that the thickness after curing is 1.2 mm in a layer shape while introducing the monomer composition obtained above in a wet lamination roll coater from a tube (inner diameter: 19 mm, length: about 1.5 m). That is, a layer-shaped monomer composition was sandwiched between two polyethylene terephthalate substrates.

The monomer composition were irradiated with ultraviolet rays (wavelength: 300 to 400 nm) having an illuminance of about 5 mW from both surfaces thereof for 3 minutes to cure the monomer composition. Thus, a resin layer (A) was formed. In this resin layer, the proportion of cells was 23% by volume.

(Preparation of damping sheet)

Glass cloth (manufactured by Nitto Boseki Co., Ltd., part number: WLA209 100 EP301) having a thickness of 0.2 mm and a basis weight of 230 g/m$^2$ as a restraint layer was stuck to one surface of the resin layer (A) to prepare a damping sheet.

Example 2

(Formation of resin layer)

Resin layer (B) was formed in the same manner as in Example 1, except that the thickness after curing was 1.6 mm in a layer shape.

(Preparation of damping sheet)

Damping sheet was prepared in the same manner as in Example 1, except that the resin layer (B) was used in place of the resin layer (A).

Example 3

(Formation of resin layer)

Resin layer (C) was formed in the same manner as in Example 1, except that the thickness after curing was 0.4 mm in a layer shape.

(Preparation of damping sheet)

Damping sheet was prepared in the same manner as in Example 1, except that the resin layer (C) was used in place of the resin layer (A) and a titanium plate having a thickness of 1.0 mm and a basis weight of 4,400 g/m$^2$ (manufactured by Kobe Steel, Ltd., standard name: JIS 4600-2001 TP340C) was used as a restraint layer.

Example 4

(Preparation of damping sheet)

Damping sheet was prepared in the same manner as in Example 1, except that the resin layer (C) was used in place of the resin layer (A) and a brass plate having a thickness of 1.0 mm and a basis weight of 8,700 g/m$^2$ (manufactured by Mitsubishi Shinkoh Co., Ltd., standard name: JIS H3100 C2810P) was used as a restraint layer.

Example 5

(Preparation of damping sheet)

Damping sheet was prepared in the same manner as in Example 1, except that the resin layer (C) was used in place of the resin layer (A) and an aluminum foil having a thickness of 1.0 mm and a basis weight of 2,700 g/m$^2$ (manufactured by Nippon Testpanel Co., Ltd., standard name: JIS A 1050P) was used as a restraint layer.

Example 6

(Preparation of damping sheet)

Damping sheet was prepared in the same manner as in Example 1, except that the resin layer (C) was used in place of the resin layer (A) and an aluminum foil having a thickness of 0.5 mm and a basis weight of 1,350 g/m$^2$ (manufactured by Nippon Testpanel Co., Ltd., standard name: JIS A 1050P) was used as a restraint layer.

Comparative Example 1

(Preparation of damping sheet)

Damping sheet was prepared in the same manner as in Example 1, except that the resin layer (C) was used in place of the resin layer (A) and an aluminum foil having a thickness of 0.1 mm and a basis weight of 270 g/m$^2$ (manufactured by Nippon Testpanel Co., Ltd., standard name: JIS H4160 A3003H) was used as a restraint layer.

Comparative Example 2

(Preparation of damping sheet)

Damping sheet was prepared in the same manner as in Example 1, except that the resin layer (C) was used in place of the resin layer (A).

Comparative Example 3

(Formation of resin layer)

Resin layer (D) was formed in the same manner as in Example 1, except that the thickness after curing was 0.8 mm in a layer shape.

(Preparation of damping sheet)

Damping sheet was prepared in the same manner as in Example 1, except that the resin layer (D) was used in place of the resin layer (A).

(Evaluation)

(1) Glass transition temperature (Tg)

Glass transition of each resin layer was measured according to a heat flow velocity differential scanning calorimetry (flow velocity DSC) of JIS K7121-1987.
The details of a measurement apparatus and measurement conditions are described below.

Apparatus: TA instrument, high sensitivity DSC Q2
Temperature range: -90 to 300°C
Temperature rising rate: 4°C/min
Temperature amplitude: ±0.5°C/min

(2) Damping properties

Each damping sheet of Examples and the Comparative Examples was cut into a size of 10 mm × 250 mm as an evaluation sample, and the sample was stuck to a central part of a steel plate (oil level cold-rolling steel plate) having a thickness of 0.8 mm and a size of 10 mm × 250 mm using a pressure roller in ordinary temperature environment. Loss factors in terms of 1 kHz, 3kHz and 5kHz were measured at 80°C and 100°C according to a forced vibration method at central support of JIS G0602. SPCC steel plate having a thickness of 0.8 mm was used as a standard test piece.

MA18143 manufactured by B&K was used as the measurement apparatus. As Fig. 2 is referenced, by calculating secondary resonant frequency $f_0$ from a resonance curve obtained and further calculating half-value widths ($f_1$ and $f_2$) obtained from $f_0$, system loss factor d was calculated from the following formula (1), respectively. The resonance curve shown in Fig. 2 shows a general explanatory view, and does not a curve of any one of Examples and Comparative Examples.

$$\text{Loss factor d} = (f_2-f_1)/f_0 \qquad\qquad (1)$$

When the loss factor in frequency of 3 kHz and 5 kHz at 80°C and 100°C is 0.02 or more, it was judged as acceptance (○), and when the loss factor is less than 0.02, it was judged as rejection (×).

The results of the measurement of the loss factor are shown in Table 1.

[Table 1]

| | | Examples | | | | | | Comparative Examples | | |
|---|---|---|---|---|---|---|---|---|---|---|
| | | 1 | 2 | 3 | 4 | 5 | 6 | 1 | 2 | 3 |
| Resin layer | Thickness (D) (mm) | 1.2 | 1.6 | 0.4 | 0.4 | 0.4 | 0.4 | 0.4 | 0.4 | 0.8 |
| | Tg (°C) | -20 | | | | | | | | |
| Restraint layer | Material | Glass cloth | | Titanium | Brass | Aluminum | | Glass cloth | | |
| | Thickness (mm) | 0.2 | | 1.0 | 1.0 | 1.0 | 0.5 | 0.1 | 0.2 | |
| | Basis weight (X) (g/m$^2$) | 230 | 230 | 4400 | 8700 | 2700 | 1350 | 270 | 230 | 230 |
| Thickness (D) × basis weight (X) | | 276 | 368 | 1760 | 3480 | 1080 | 540 | 108 | 92 | 184 |
| Loss factor | Temperature 80°C 1 kHz conversion: | 0.03 | 0.03 | 0.03 | 0.03 | 0.03 | 0.03 | 0.02 | 0.02 | 0.03 |
| | 3 kHz conversion: | 0.02 | 0.04 | 0.04 | 0.05 | 0.03 | 0.02 | 0.01 | 0.02 | 0.02 |
| | 5 kHz conversion: | 0.04 | 0.09 | 0.06 | 0.11 | 0.05 | 0.02 | 0.01 | 0.02 | 0.02 |
| | Evaluation | ○ | ○ | ○ | ○ | ○ | ○ | × | ○ | ○ |
| | Temperature 100°C 1 kHz conversion: | 0.02 | 0.02 | 0.02 | 0.02 | 0.02 | 0.03 | 0.01 | 0.01 | 0.01 |
| | 3 kHz conversion: | 0.02 | 0.04 | 0.04 | 0.10 | 0.02 | 0.02 | 0.01 | 0.01 | 0.01 |
| | 5 kHz conversion: | 0.05 | 0.14 | 0.09 | 0.18 | 0.06 | 0.02 | 0.01 | 0.01 | 0.02 |
| | Evaluation | ○ | ○ | ○ | ○ | ○ | ○ | × | × | × |

It was seen from the results of Table 1 that the damping sheets of Examples 1 to 6 in which the glass transition temperature of the resin layer is 20°C or lower and the product (D·X) of the thickness (D) (mm) of the resin layer and the basis weight (X) (g/m$^2$) of the restraint layer is 250 mm·g/m$^2$ or more have the loss factor at a measurement frequency of 3 kHz or more of 0.02 or more in high temperature environment of 80°C and 100°C, and thus exhibit excellent damping properties.

Although the present invention has been described in detail and by reference to the specific embodiments, it is apparent to one skilled in the art that various modifications or changes can be made without departing the spirit and scope of the present invention. This application is based on Japanese Patent Application No. 2012-047411 filed on March 2, 2012, the disclosure of which is incorporated herein by reference.

DESCRIPTION OF REFERENCE NUMERALS AND SIGNS

1    Damping sheet
2    Resin layer
3    Restraint layer
5    Vibrating member
6    Separator (release paper)

**Claims**

1.  A damping sheet comprising a resin layer and a restraint layer,
    wherein the resin layer has a glass transition temperature of 20°C or lower, and a product (D·X) of a thickness (D) (mm) of the resin layer and a basis weight (X) ($g/m^2$) of the restraint layer is 250 mm·$g/m^2$ or more.

2.  The damping sheet according to claim 1, wherein the basis weight (X) of the restraint layer is 200 $g/m^2$ or more.

3.  The damping sheet according to claim 1, wherein the basis weight (X) of the restraint layer is 1,000 $g/m^2$ or more.

4.  The damping sheet according to any one of claims 1 to 3, wherein the thickness (D) of the resin layer is 0.1 mm or more.

5.  The damping sheet according to any one of claims 1 to 4, wherein the resin layer contains an acrylic polymer obtained by polymerizing a monomer component containing an alkyl (meth)acrylate as a main component.

6.  The damping sheet according to claim 5, wherein the resin layer contains hollow inorganic microparticles.

7.  The damping sheet according to claim 6, wherein the hollow inorganic microparticles are hollow glass balloons.

8.  The damping sheet according to claim 6 or 7, wherein a content ratio of the hollow inorganic microparticles is from 5 to 50% by volume in the resin layer.

9.  The damping sheet according to any one of claims 5 to 8, wherein the resin layer further contains cells.

10. The damping sheet according to claim 9, wherein a content ratio of the cells is from 5 to 50% by volume in the resin layer.

11. The damping sheet according to any one of claims 5 to 10, wherein the resin layer is obtained by ultraviolet curing.

12. A method for damping a vibrating member, comprising sticking the damping sheet according to any one of claims 1 to 11 to the vibrating member.

13. A use method of a vibrating member, comprising using a vibrating member having stuck thereto the damping sheet according to any one of claims 1 to 11, at a temperature of 80°C or higher in a frequency of 3 kHz or more.

*Fig. 1(a)*

*Fig. 1(b)*

*Fig. 2*

<table>
<tr><td colspan="2" align="center">**INTERNATIONAL SEARCH REPORT**</td><td>International application No.<br>PCT/JP2013/055581</td></tr>
</table>

**A. CLASSIFICATION OF SUBJECT MATTER**
*F16F15/02*(2006.01)i, *B32B27/30*(2006.01)i

According to International Patent Classification (IPC) or to both national classification and IPC

**B. FIELDS SEARCHED**

Minimum documentation searched (classification system followed by classification symbols)
F16F15/02, B32B27/30

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-242671 A (Sekisui Chemical Co., Ltd.),<br>22 October 2009 (22.10.2009),<br>paragraphs [0002], [0035] to [0040], [0083],<br>[0087]<br>(Family: none) | 1-4<br>5-13 |
| Y | JP 2000-56128 A (Nitto Denko Corp.),<br>25 February 2000 (25.02.2000),<br>paragraph [0080]<br>(Family: none) | 5-13 |
| Y | JP 62-20542 A (Toyoda Gosei Co., Ltd.),<br>29 January 1987 (29.01.1987),<br>page 2, upper right column, line 1 to lower<br>left column, line 8; page 3, upper left column,<br>lines 4 to 18<br>(Family: none) | 6-13 |

☐ Further documents are listed in the continuation of Box C.  ☐ See patent family annex.

| | | |
|---|---|---|
| \* | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>19 March, 2013 (19.03.13) | Date of mailing of the international search report<br>02 April, 2013 (02.04.13) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

**Patent documents cited in the description**

- JP 9136998 A
- JP 2011089547 A
- JP 2012047411 A